# EUROPÄISCHE PATENTANMELDUNG

(11) **EP 3 789 236 A1**
(43) Veröffentlichungstag der Anmeldung: **10.03.2021**
(21) Anmeldenummer: 20189792.3
(22) Anmeldetag: 06.08.2020
(51) Int. Cl.: B60L 53/31, H02G 11/00

(54) **LADESTATION FÜR EIN ELEKTRISCH BETRIEBENES FAHRZEUG**

(30) Priorität: 04.09.2019 DE 102019213451
(71) Anmelder: VOLKSWAGEN AG, 38440 Wolfsburg (DE)
(72) Erfinder: Meitzner, Matthias, 38176 Wendeburg (DE); Busse, Carsten, 38444 Wolfsburg (DE); Rowold, Karsten, 38162 Cremlingen (DE); Rendel, Holger, 38112 Braunschweig (DE); Strube, Maik, 38533 Eickhorst (DE); Grzeskowiak, Marius, 38102 Braunschweig (DE)

(57) **Zusammenfassung**

Die Erfindung betrifft eine Ladestation zum Aufladen einer Traktionsbatterie eines elektrisch betriebenen Fahrzeugs (25), mit einem Ladekabel (1), das über seinen Ladestecker (3) am Fahrzeug (25) ansteckbar ist, wobei die Ladestation eine Kabelführungseinrichtung aufweist, mittels der das Ladekabel (1) von seiner Verwahrposition in eine Gebrauchslage bringbar ist, in der der Ladestecker (3) vom Fahrzeugnutzer am Fahrzeug (25) ansteckbar ist. Erfindungsgemäß weist die Kabelführungseinrichtung eine elastisch nachgiebige Kabel-Aufhängung (7) auf, die an einer Anbindungsstelle (A) am Ladekabel (1) angebunden ist. Bei einem nutzerseitigen Überführen des Ladekabels (1) in seine Gebrauchslage ist die Kabel-Aufhängung (7) unter Aufbau einer Rückstellkraft (F_{R}) um einen Auszugsweg (Δa) verlängerbar.

## Beschreibung

Die Erfindung betrifft eine Ladestation zum Aufladen einer Traktionsbatterie eines elektrisch betriebenen Fahrzeugs nach dem Oberbegriff des Anspruches 1.

Eine wandmontierte, mobile oder als Ladesäule realisierte Ladestation weist ein Ladekabel mit einem Ladestecker auf, der für den Ladevorgang am elektrisch betriebenen Fahrzeug ansteckbar ist. Das vergleichsweise biegesteife Kupfer-Ladekabel muss eine gewisse Kabellänge haben, um eine flexible Handhabung des Ladekabels zu gewährleisten. Die Kabellänge kann wiederum dazu führen, dass sich das Ladekabel verdreht oder beim Ladevorgang in Kontakt mit dem Boden kommt und verschmutzt.

Eine gattungsgemäße Ladestation weist eine Kabelführungseinrichtung auf, mittels der das Ladekabel von seiner Verwahrposition an der Ladestation in eine Gebrauchslage bringbar ist, in der der Ladestecker vom Fahrzeugnutzer am Fahrzeug ansteckbar ist. Beispielhaft kann im Stand der Technik das Ladekabel in seiner Verwahrstation manuell um einen Kabelträger gewickelt werden, was jedoch für den Fahrzeugnutzer mit Komforteinbußen verbunden ist.

Aus der WO 2013/017114 A2 ist eine Lagereinrichtung mit Kupplung für ein Elektrofahrzeug bekannt.

Die Aufgabe der Erfindung besteht darin, eine Ladestation zum Aufladen einer Traktionsbatterie eines elektrisch betriebenen Fahrzeugs bereitzustellen, bei der der Ladevorgang im Vergleich zum Stand der Technik mit technisch einfachen Mitteln komfortabler gestaltet ist.

Die Aufgabe ist durch die Merkmale des Anspruches 1 gelöst. Bevorzugte Weiterbildungen der Erfindung sind in den Unteransprüchen offenbart.

Gemäß dem kennzeichnenden Teil des Anspruches 1 wird das Ladekabel in seiner Verwahrposition nicht um einen Wicklungsträger der Ladestation gewickelt. Anstelle dessen weist die Ladestation gemäß dem kennzeichnenden Teil des Anspruches 1 eine elastisch nachgiebige Kabel-Aufhängung auf, die an einer Anbindungsstelle am Ladekabel angebunden ist. Um einen Ladevorgang zu starten, wird das Ladekabel von seiner Verwahrposition in seine Gebrauchslage vom Fahrzeugnutzer überführt, in der Ladestecker des Ladekabels am Fahrzeug anschließbar ist. Beim Überführen des Ladekabels in die Gebrauchslage wird die Kabel-Aufhängung unter Aufbau einer Rückstellkraft um einen Auszugsweg verlängert. Demgegenüber wird beim Lösen des Ladesteckers vom Fahrzeug das Ladekabel mitsamt Ladestecker unter Abbau der Rückstellkraft wieder selbsttätig in seine Verwahrposition rückgeführt. Sowohl in der Verwahrposition als auch in der Gebrauchslage ist das Ladekabel in einer schlaufenartigen Hochführung mit Vertikalabstand vom Boden aufgehängt.

Die Grundidee der Erfindung besteht darin, das Ladekabel so zu verwahren, dass es nicht aufgewickelt werden muss und nicht den Boden berührt. Das kann beispielhaft erreicht werden, wenn ein schwenkbarer Ladekabelkran zum Einsatz kommt, bei dem das Ladekabel aufgehängt wird. Die Größe bzw. Höhe des Krans wird entsprechend der Länge als auch dem Biegeradius des Kabels ausgelegt. Ebenfalls kann durch die Höhe der Montage der Ladestation (das heißt der Lade-Wallbox) an der Wand die Kabellänge variiert werden. Innerhalb des Krans kann ein Seilzugsystem verbaut sein, das bei Bedarf das Ladekabel wieder in die Verwahrposition oder Grundposition zurückzieht. Das Seil des Seilzugsystems wird mit Umlenkrollen innerhalb des Krans geführt, damit die Form des Krans an die jeweilige Designausprägungen angepasst werden kann. Die Anzahl der Umlenkrollen kann entsprechend des Kran-Designs variieren. Zusätzlich kann der Kran sowohl schwenkbar als auch starr ausgeführt werden, um die Handhabung des Ladekabels in alle Richtungen zu vereinfachen.

Das Seilzugsystem kann unterschiedlich ausgeführt sein, zum Beispiel hat es idealerweise ein automatische Rückzugsystem, das dafür sorgt, dass das Ladekabel nicht den Boden berührt und während des Ladebetriebes am Fahrzeug eine gewisse Spannung des Kabels ermöglicht. Alternativ dazu das Seilzugsystem durch ein entsprechendes Federsystem ausgeführt sein, welches vergleichbare Funktionen gewährleistet. Auch eine Kombination aus einem Feder- und einem Seilzugsystem oder einem Federsystem mit einem Seil ist in dieser Umsetzung möglich. Das Seil kann in unterschiedlichen Materialien ausgeführt sein. Aktuelle Seile basieren auf Kunststoffmaterialien oder auf Metallen. Die Umlenkrollen können sowohl das Seilsystem als auch ein entsprechendes Federsystem führen. Die Anzahl der Umlenkrollen ist abhängig sowohl vom entsprechenden verwendeten System und von der konstruktiven Kran-Gestaltung. Anstatt der Umlenkrollen sind auch andere Gleitführungen möglich, wie zum Beispiel Teflonblöcke oder ähnliches.

Optional kann der Ladestecker in eine Ladesteckerhalterung an der Wand oder an der Lade-Wallbox gelegt werden.

Wie oben beschrieben ist die Anzahl der Umlenksysteme (bzw. der Umlenkrollen) abhängig vom Design der Lade-Wallbox und von den baulichen Gegebenheiten. Auch ein Entfall des Krans ist möglich. Hierbei ist das Seilzugsystem weiterhin voll nutzbar.

Mittels der Erfindung wird die Handhabung des Ladekabels flexibler und einfacher gestaltet. Speziell bei Ausführung der Erfindung mit dem Ladekabelkran kann der Zugang des Fahrzeugnutzers zum Ladekabel weiter vereinfacht werden. Außerdem kann durch einen Kran das Ladekabel länger ausgeführt werden, ohne dass es den Boden berührt. Aufgrund der elastisch nachgiebigen Ladekabel-Aufhängung kann ein Verdrehen und Verheddern des Ladekabels in seiner Verwahrposition und/oder beim Ladekabel-Gebrauch verhindert werden. Zudem wird verhindert, dass das Ladekabel nicht mehr den Boden berührt und dadurch verschmutzt. Die Handhabung des Ladekabels wird somit insgesamt vereinfacht und bequemer für den Nutzer. Zudem ist die Gefahr von Verschleiß oder Beschädigung des Ladekabels verringert.

Nachfolgend werden Erfindungsaspekte im Einzelnen hervorgehoben: So kann in einer technischen Umsetzung der Erfindung die Anbindungsstelle, an der die Kabel-Aufhängung am Ladekabel angreift, das Ladekabel aufteilen in einen, von der Ladestation wegführenden Ladekabelabschnitt und in einen freien Ladekabelabschnitt, an dessen freiem Ende der Ladestecker ausgebildet ist. Im Hinblick auf ein störungsfreies Überführen des Ladekabels zwischen seiner Verwahrposition und seiner Gebrauchslage ist es bevorzugt, wenn das Aufhängungselement an der Anbindungsstelle fest am Ladekabel angebunden ist, und zwar insbesondere ortsfest in der Ladekabel-Längsrichtung. Auf diese Weise bleibt die Kabellänge des freien Ladekabelabschnittes (erstreckt sich zwischen der Anbindungsstelle und dem Ladestecker) sowohl in der Gebrauchslage als auch in der Verwahrposition stets konstant.

Bevorzugt kann das Ladekabel in einer schlaufenartigen Hochführung an der elastisch nachgiebigen Kabel-Aufhängung aufgehängt sein. Bei der schlaufenartigen Hochführung kann in einer einfachen Realisierung ausgehend von der Ladestation der davon wegführende Ladekabelabschnitt um einen Höhenversatz vertikal nach oben bis zur Aufhängungsstelle geführt werden, die einen oberen Ladekabel-Scheitel bildet. Von dem oberen Ladekabel-Scheitel kann der freie Ladekabelabschnitt gegensinnig vertikal nach unten hängen bzw. nach unten geführt sein.

In Abgrenzung zum Stand der Technik wird das Ladekabel in seiner Verwahrposition nicht um einen Wicklungsträger der Ladestation aufgewickelt. Anstelle dessen nimmt das Ladekabel in seiner Verwahrposition einen sinusförmigen oder mäanderförmigen Ladekabel-Verlauf ein, und zwar mit insbesondere genau einem vertikal oberen Ladekabel-Scheitel unmittelbar am Anbindungspunkt zur Kabel-Aufhängung.

In den sinusförmigen oder mäanderförmigen Ladekabel-Verlauf können die beiden Ladekabelabschnitte in der Horizontalrichtung um einen Flankenabschnitt voneinander beabstandet sein. Beim Überführen des Ladekabels von seiner Verwahrposition in seine Gebrauchslage vergrößert sich der Flankenabstand zwischen den Ladekabelabschnitten. Gleichzeitig reduziert sich der Ladekabel-Höhenversatz.

In einer ersten Ausführungsvariante kann das Aufhängungselement Bestandteil eines Federsystems sein. In diesem Fall kann sich das Federsystem beim Überführen des Ladekabels in seine Gebrauchslage um den Auszugsweg ausdehnen. Bei der Rückführung des Ladekabels in seine Verwahrposition zieht sich das Federsystem um den Auszugsweg wieder zusammen.

Alternativ dazu kann das Aufhängungselement Bestandteil eines Seilzugsystems sein. Bei dem das Aufhängungselement an einem Seil angebunden ist. Das Seil kann auf einer, in einer Aufwickelrichtung federvorgespannten Wickeltrommel aufgewickelt sein. Beim Überführen des Ladekabels in seine Gebrauchslage wird daher das Seil um den Auszugsweg von der Wickeltrommel abgewickelt. Bei Rückführung des Ladekabels in seine Verwahrposition wird das Seil wieder selbsttätig auf die Wickeltrommel aufgewickelt.

Damit der Ladevorgang möglichst flexibel gestaltet werden kann, ist es bevorzugt, wenn der Ladestation ein, insbesondere schwenkbarer Ladekabel-Tragarm zugeordnet ist. Der Ladekabel-Tragarm kann Bestandteil eines schwenkbaren Ladekabelkrans sein, an dem das Aufhängungselement angeordnet ist. Auf diese Weise kann das Aufhängungselement örtlich beabstandet zur Ladestation positioniert sein und gegebenenfalls beim Ladevorgang zumindest teilweise das aufzuladende Fahrzeug nach Art eines Auslegers überragen.

In einer Weiterbildung der Erfindung kann mittels des Federzugs/Seilzugs und/oder durch eine geschickte Anordnung der Umlenkrollen nicht nur das Ladekabel von seiner Gebrauchsposition in seine Verwahrposition zurückgeführt werden, sondern zusätzlich auch der schwenkbare Ladekabel-Tragarm in seine Verwahrposition zurückgeführt werden.

Zur weiteren Komfortsteigerung kann der Ladestation eine Ladestecker-Halterung zugeordnet sein, an der der Ladestecker geschützt vor äußeren mechanischen Einflüssen in der Ladekabel-Verwahrposition positioniert werden kann.

Nachfolgend sind Ausführungsbeispiele der Erfindung anhand der beigefügten Figuren gezeigt.

Es zeigen:
- Figur 1: eine Ladestation mit in seiner Verwahrposition befindlichem Ladekabel;
- Figur 2: in einer Ansicht entsprechend der Figur 1 das Ladekabel in seiner Gebrauchslage, und
- Figur 3: in einer Ansicht entsprechend der Figur 1 ein zweites Ausführungsbeispiel der Ladestation.

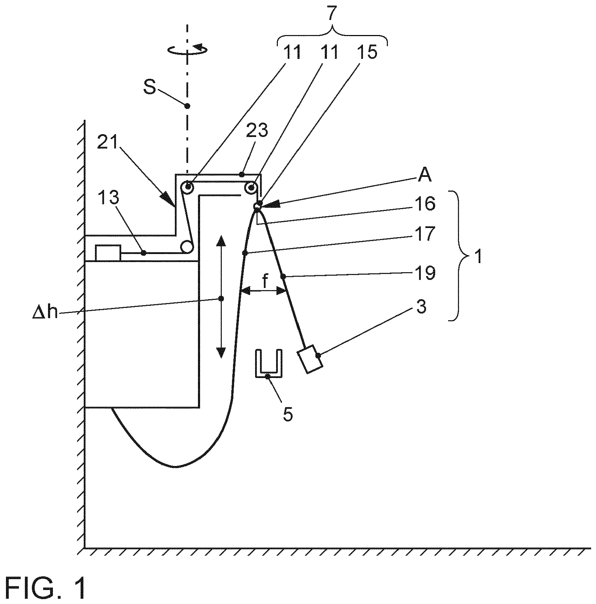

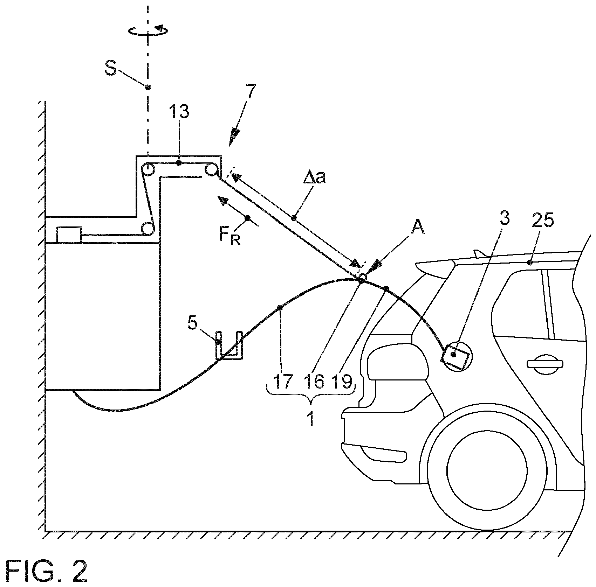

In der Figur 1 ist grob schematisch eine wandmontierte Ladestation gezeigt, die exemplarisch als eine Wallbox realisiert ist. Die Ladestation ist im Hinblick auf ein einfaches Verständnis der Erfindung nur insoweit angedeutet, als es zum Verständnis der Erfindung erforderlich ist. Demzufolge weist die Ladestation ein bis zu einem gewissen Grad biegesteifes Kupfer-Ladekabel 1 mit einem Ladestecker 3 auf, der bei einem Ladevorgang am elektrisch betriebenen Fahrzeug 25 (Figur 2) ansteckbar ist. In der Figur 1 ist das Ladekabel 1 in seiner Verwahrposition gezeigt, in der der Ladestecker 3 in einer wandmontierten Ladesteckerhaltung 5 gehaltert werden kann.

Wie aus der Figur 1 weiter hervorgeht, ist das Ladekabel 1 in seiner Verwahrposition in einer schlaufenartigen Hochführung an einer elastisch nachgiebigen Kabel-Aufhängung 7 gehaltert. Die Kabel-Aufhängung 7 ist Bestandteil einer Kabelführungseinrichtung, die auf einer Oberseite der Ladestation vorgesehen ist. In der Figur 1 weist die Kabelführungseinrichtung zudem ein Seilzugsystem mit Umlenkrollen 11 auf, über die ein Zugseil 13 geführt ist. An dessen Seilende befindet sich ein Aufhängungselement 15, das an einer Anbindungsstelle A ortsfest am Ladekabel 1 angebunden ist.

Die Anbindungsstelle A teilt das Ladekabel 1 in einen von der Ladestation wegführenden Ladekabelabschnitt 17 und in einen freien Ladekabelabschnitt 19 auf, an dessen freiem Ende der Ladestecker 3 ausgebildet ist. Das Zugseil 13 ist auf einer nicht gezeigten Wickeltrommel (in der Figuren als Kästchen am linken Ende des Zugseils 13 angedeutet) aufgewickelt, die in einer Aufwickelrichtung federvorgespannt ist. Auf diese Weise ist das Aufhängungselement 15 elastisch nachgiebig an der Kabelführungseinrichtung positioniert. Die Kabelführungseinrichtung weist zudem einen um eine vertikale Schwenkachse S schwenkbaren Ladekabelkran 21 mit einem von der Ladestation abragenden Tragarm 23 auf. Am freien Ende des Tragarms 23 ist das Aufhängungselement 15 positioniert.

In der, in der Figur 1 gezeigten Verwahrposition nimmt das an der Kabel-Aufhängung 7 gehalterte Ladekabel 1 einen sinusförmigen oder mäanderförmigen Ladekabel-Verlauf ein. In dem mäanderförmigen Ladekabel-Verlauf ist der von der Ladestation wegführende Ladekabelabschnitt 17 um einen Höhenversatz Δh vertikal nach oben bis zur Anbindungsstelle A geführt, die einen oberen Ladekabel-Scheitel 16 bildet. Von dem Ladekabel-Scheitel 16 hängt der freie Ladekabelabschnitt 17 vertikal nach unten. In dem dargestellten mäanderförmigen Ladekabel-Verlauf sind die beiden Ladekabelabschnitte 17, 19 in einer Horizontalrichtung um einen Flankenabstand f voneinander beabstandet.

In der Figur 2 ist das Ladekabel 1 in seiner Gebrauchslage gezeigt, in der der Ladestecker 3 von einem Fahrzeugnutzer am elektrisch betriebenen Fahrzeug 25 angesteckt ist. Beim nutzerseitigen Überführen des Ladekabels 1 in die in der Figur 2 gezeigten Gebrauchslage wird der Ladestecker 3 vom Fahrzeugnutzer in Richtung elektrisch betriebenes Fahrzeug 25 gezogen. Dadurch wird das Zugseil 13 unter Aufbau einer Rückstellkraft F_{R} um den Auszugweg Δa von der Aufwickelrolle abgewickelt. Beim Überführen des Ladekabels 1 von der Verwahrposition in die Gebrauchslage reduziert sich gemäß der Figur 2 der Ladekabel-Höhenversatz Δh und vergrößert sich gleichzeitig der Flankenabstand f zwischen den beiden Ladekabelabschnitten 17, 19. In der Gebrauchslage nimmt das Ladekabel 1 nach wie vor einen sinusförmigen bzw. mäanderförmigen Ladekabel-Verlauf ein, der im Vergleich zur Verwahrposition flacher ausgebildet ist. Sowohl in der Verwahrposition als auch in der Gebrauchslage erstreckt sich das Ladekabel 1 zuverlässig in einer Hochführung mit Abstand zum Boden ist.

Nach erfolgtem Ladevorgang löst der Nutzer den Ladestecker 3 vom Fahrzeug 25, wodurch das Ladekabel 1 unter Abbau der Rückstellkraft F_{R} wieder selbsttätig in seine Verwahrposition (Figur 1) rückgeführt wird.

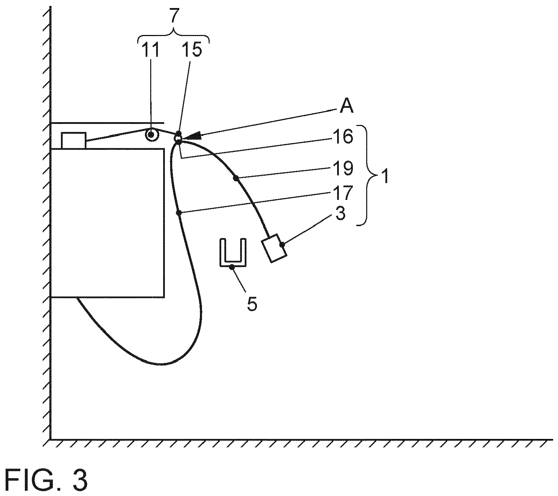

In der Figur 3 ist die Ladestation gemäß einem zweiten Ausführungsbeispiel gezeigt. Der grundsätzliche Aufbau sowie die Funktionsweise der elastisch nachgiebigen Kabel-Aufhängung 7 der Ladestation ist identisch mit dem Aufbau sowie der Funktionsweise der Kabel-Aufhängung 7 gemäß dem ersten Ausführungsbeispiel. Im Unterschied zur Figur 1 oder 2 weist in der Figur 3 die Kabelführungseinrichtung keinen zusätzlichen schwenkbaren Ladekabelkran 21 auf. Vielmehr ist das Aufhängungselement 15 unmittelbar an der Ladestation positioniert.

### Bezugszeichenliste

- 1: Ladekabel
- 3: Ladestecker
- 5: Ladestecker-Halterung
- 7: elastisch nachgiebige Kabel-Aufhängung
- 11: Umlenkrollen
- 13: Zugseil
- 15: Aufhängungselement
- 17: von der Ladestation wegführender Ladekabelabschnitt
- 19: freier Ladekabelabschnitt
- 21: Ladekabelkran
- 23: Tragarm
- 25: elektrisch betriebenes Fahrzeug
- S: Schwenkachse
- A: Anbindungsstelle
- Δa: Auszugsweg
- Δh: Ladekabel-Höhenversatz
- f: Flankenabstand
- F_{R}: Rückstellkraft

## Patentansprüche

1. Ladestation zum Aufladen einer Traktionsbatterie eines elektrisch betriebenen Fahrzeugs (25), mit einem Ladekabel (1), das über seinen Ladestecker (3) am Fahrzeug (25) ansteckbar ist, wobei die Ladestation eine Kabelführungseinrichtung aufweist, mittels der das Ladekabel (1) von seiner Verwahrposition in eine Gebrauchslage bringbar ist, in der der Ladestecker (3) vom Fahrzeugnutzer am Fahrzeug (25) ansteckbar ist, **dadurch gekennzeichnet, dass** die Kabelführungseinrichtung eine elastisch nachgiebige Kabel-Aufhängung (7) aufweist, die an einer Anbindungsstelle (A) am Ladekabel (1) angebunden ist, und dass beim nutzerseitigen Überführen des Ladekabels (1) in seine Gebrauchslage die Kabel-Aufhängung (7) unter Aufbau einer Rückstellkraft (F_{R}) um einen Auszugsweg (Δa) verlängerbar ist, und dass mit dem Lösen des Ladesteckers (3) das Ladekabel (1) mitsamt Ladestecker (3) unter Abbau der Rückstellkraft (F_{R}) selbsttätig wieder in seine Verwahrposition rückführbar ist.

2. Ladestation nach Anspruch 1, **dadurch gekennzeichnet, dass** die Anbindungsstelle (A) das Ladekabel (1) aufteilt in einen von der Ladestation wegführenden Ladekabelabschnitt (17) und in einen freien Ladekabelabschnitt (19), an dessen freiem Ende der Ladestecker (3) angeordnet ist, und dass insbesondere die elastisch nachgiebige Kabel-Aufhängung (7) ein Aufhängungselement (15) aufweist, das an der Anbindungsstelle (A) fest am Ladekabel (1) angebunden ist, insbesondere ortsfest in der Ladekabel-Längsrichtung.

3. Ladestation nach Anspruch 1 oder 2, **dadurch gekennzeichnet, dass** das Ladekabel (1) in einer schlaufenartigen Hochführung an der elastisch nachgiebigen Kabel-Aufhängung (7) gehaltert ist, und dass in der schlaufenartigen Hochführung der von der Ladestation wegführende Ladekabelabschnitt (17) um einen Kabel-Höhenversatz (Δh) vertikal nach oben bis zur Anbindungsstelle (A) geführt ist, die einen oberen Ladekabel-Scheitel (16) bildet, von dem der freie Ladekabelabschnitt (19) gegensinnig vertikal nach unten hängt bzw. geführt ist.

4. Ladestation nach einem der vorhergehenden Ansprüche, **dadurch gekennzeichnet, dass** zumindest in der Verwahrposition das an der Kabel-Aufhängung (7) gehalterte Ladekabel (1) einen sinusförmigen oder mäanderförmigen Ladekabel-Verlauf einnimmt, und zwar mit insbesondere genau einem vertikal oberen Ladekabel-Scheitel (16) am Anbindungspunkt zur Kabel-Aufhängung (7).

5. Ladestation nach Anspruch 4, **dadurch gekennzeichnet, dass** in dem sinusförmigen oder mäanderförmigen Ladekabel-Verlauf die beiden Ladekabelabschnitte (15, 17) in Horizontalrichtung um einen Flankenabstand (f) voneinander beabstandet sind, und dass insbesondere das Überführen des Ladekabels (1) in die Gebrauchslage unter Vergrößerung des Flankenabstandes (f) und unter Reduzierung des Höhenversatzes (Δh) erfolgt.

6. Ladestation nach einem der Ansprüche 2 bis 5, **dadurch gekennzeichnet, dass** das Aufhängungselement (15) Bestandteil eines Federsystems ist, und dass beim Überführen des Ladekabels (1) in seine Gebrauchslage sich das Federsystem um den Auszugsweg (Δa) ausdehnt.

7. Ladestation nach einem der Ansprüche 2 bis 5, **dadurch gekennzeichnet, dass** das Aufhängungselement (15) Bestandteil eines Seilzugsystems ist, bei dem das Aufhängungselement (15) an einem Seil (13) angebunden ist, das auf einer in einer Aufwickelrichtung federvorgespannten Wickeltrommel aufgewickelt ist, und dass beim Überführen des Ladekabels (1) in die Gebrauchslage das Seil (13) um den Auszugsweg (Δa) von der Wickeltrommel abgewickelt wird.

8. Ladestation nach einem der vorhergehenden Ansprüche, **dadurch gekennzeichnet, dass** der Ladestation ein, insbesondere schwenkbarer Ladekabel-Tragarm (23) zugeordnet ist, an dem das Aufhängungselement (15) angeordnet ist, und zwar mit Abstand zur Ladestation.

9. Ladestation nach Anspruch 8, **dadurch gekennzeichnet, dass** insbesondere mittels des Federzugs/Seilzugs und/oder durch eine geschickte Anordnung der Umlenkrollen (11) beim Rückführen des Ladekabels (1) von der Gebrauchsposition in die Verwahrposition auch der schwenkbare Ladekabel-Tragarm (23) in die Verwahrposition zurückführbar ist.

10. Ladestation nach einem der vorhergehenden Ansprüche, **dadurch gekennzeichnet, dass** der Ladestation eine Ladestecker-Halterung (5) zugeordnet ist, an der der Ladestecker (3) in der Ladekabel-Verwahrposition positionierbar ist.
